# EUROPEAN PATENT APPLICATION

(11) **EP 4 382 754 A1**
(43) Date of publication of application: **12.06.2024**
(21) Application number: 22211903.4
(22) Date of filing: 07.12.2022
(51) Int. Cl.: F16B 37/04, F16L 21/02

(54) **CONNECTOR UNIT COMPRISING NUT RECEPTACLE**

(71) Applicant: Hilti Aktiengesellschaft, 9494 Schaan (LI)
(72) Inventor: Thon, Raphael, 6800 Feldkirch (AT); Fasser, Simon, 9493 Mauren (LI)
(74) Representative: Hilti Aktiengesellschaft Corporate Intellectual Property

(57) **Abstract**

Connector unit for providing a connection to a strut channel that has two opposing lips, the connector unit comprising an elongate channel nut for engaging behind the lips of the channel, wherein the channel nut has a threaded bore for threadedly receiving a threaded rod, a rotational driver for rotationally coupling the threaded rod to the channel nut, for rotating the channel nut between a channel insertion rotational position and a channel engagement rotational position, and a lip insert for engaging between the lips of the channel so as to provide a rotationally fixed seat on the channel, wherein the lip insert has at least one nut receptacle for receiving the channel nut when the channel nut is in the channel engagement rotational position so as to rotationally lock the channel nut in the channel engagement rotational position.

## Description

The invention relates to a connector unit for providing a connection to a strut channel, a channel connector comprising such a connector unit and to a connector arrangement comprising such a channel connector.

EP 3805579 A1 discloses a channel nut provided with offset notches that are intended for engaging the lips of a strut channel. Channel nuts like those described in EP 3805579 A1 are used in a product sold under the name "Hilti MT-TL-M10". In case of this product, the channel nut is rotated by means of a plastic frame connected to the channel nut.

DE 10218602 A1, EP 1357304 B1, and EP 3927981 A1 disclose channel connectors, in which rotation of the channel nut is caused pushing the channel connectors into the channel.

It is an object of the invention to provide a connector unit, a channel connector and a connector arrangement that allow particularly easy and reliable installation, whilst being particularly well-performing.

This object is achieved by a connector unit according to claim 1. Dependent claims refer to preferred embodiments of the invention.

Accordingly, there is provided a connector unit for providing a connection to a strut channel that has two opposing lips, the connector unit comprising
- an elongate channel nut for engaging behind the lips of the channel, wherein the channel nut has a threaded bore for threadedly receiving a threaded rod,
- a rotational driver for rotationally coupling the threaded rod to the channel nut, for rotating the channel nut between a channel insertion rotational position and a channel engagement rotational position, and
- a lip insert for engaging between the lips of the channel so as to provide a rotationally fixed seat on the channel, wherein the lip insert has at least one nut receptacle for receiving the channel nut when the channel nut is in the channel engagement rotational position so as to rotationally lock the channel nut in the channel engagement rotational position.

Accordingly, by means of the rotational driver, the channel nut and the threaded rod are coupled to rotate together. This allows the channel nut to be rotated from the channel insertion rotational position, in which the channel nut can pass between the lips of the channel into the channel, into the channel engagement rotational position, in which the channel nut engages behind the lips of the channel, through rotating the threaded rod. The lip insert is intended to be arranged, at least partly, between the lips of the channel, where it geometrically locks between the lips, so as to provide a rotationally fixed seat on the channel, possibly with some play, but possibly also tight. The lip insert is provided with at least one nut receptacle that can receive the channel nut when the latter is in the channel engagement rotational position, so as to geometrically lock the channel nut in the channel engagement rotational position. Thus, the at least one nut receptacle geometrically constraints the channel nut when received therein, so as to prevent rotation of the channel nut back into channel insertion rotational position. This can provide particularly good and reliable performance. Moreover, a functionality can be provided that ensures that the channel nut can act against the lips of the channel only when the channel nut is received within the nut receptacle, which can prevent installation in an incorrect channel nut position, further improving reliability and/or performance. If the channel nut is axially biased, in particular by the compression spring discussed later, the nut receptacle can also provide a snap functionality when the channel nut enters the nut receptacle, potentially giving the installer audible, haptic or/and optical feedback that the channel nut has reached the intended channel insertion rotational position. This can further improve performance and/or reliability.

In particular, the at least one nut receptacle is intended for axially receiving the channel nut when the channel nut is in the channel engagement rotational position, i.e. positioning of the channel nut within the nut receptacle involves axial displacement of the channel nut with respect to the lip insert.

The rotational driver is intended for rotationally coupling the threaded rod to the channel nut, for rotating the channel nut, relative to the channel and/or relative to the lip insert engaged within the channel, between the channel insertion rotational position and the channel engagement rotational position. The channel insertion rotational position and a channel engagement rotational position can have an angular offset of 60° for example. Rotation between the channel insertion rotational position and the channel engagement rotational position takes place around an axis of the threaded bore, which is the connector axis.

The lip insert can preferably be a plastic part. The channel nut can preferably be, at least partly, a metal part. The lip insert can have a passage for receiving the threaded rod when the threaded rod is rotationally coupled to the channel nut by means of the rotational driver and/or when the threaded rod is threadedly received in the threaded bore of the channel nut.

The rotational driver can include means to geometrically, frictionally or/and chemically couple the threaded rod to the channel nut. It could be simply a gluing layer temporarily locking the threaded rod within the threaded bore. It is particularly preferred that the rotational driver comprises a driver sleeve for receiving the threaded rod, and a driver base that connects the driver sleeve to the channel nut. This can provide a particularly well performing yet easy to manufacture design. The driver sleeve is aligned with the threaded bore of the channel nut, so that the threaded rod can pass through the driver sleeve into the threaded bore. The driver sleeve and the driver base are preferably one piece and/or plastic parts. The driver base can in particular be a frame. The driver sleeve is preferably so dimensioned that it frictionally engages the threaded rod inserted into the driver sleeve. More particularly, the driver sleeve can be so dimensioned that it frictionally engages the tips of the thread of the threaded rod inserted into the driver sleeve. The driver sleeve can be provided with one or more cut-outs, for example to provide elasticity.

According to another advantageous embodiment of the invention, the driver sleeve projects into the lip insert so as to provide a rotational bearing of the driver sleeve within the lip insert. Accordingly, the channel nut is rotatably mounted on the lip insert via the driver sleeve that is connected to the driver sleeve. This can further improve performance and reliably. The driver sleeve might be continuous, or it might also be interrupted, for example to increase flexibility, for example to improve snap or/and ratchet functionality described below.

The driver sleeve is preferably connected to the lip insert by means of an annular snap fit. This can provide a loss prevention mechanism in a particular easy manner. The annular snap fit can preferably comprise at least one snap tooth provided on the driver sleeve.

Advantageously, the rotational driver comprises at least one ratchet tooth for engaging, in particular for axially engaging, the threaded rod. Accordingly, at least one tooth is provided that is provided with some elasticity, internally or/and externally, that allows the tooth to be displaced as the threaded rod to passes by and that subsequently resets the tooth to engage into the thread of the threaded rod. An axial coupling of the rotational driver to the threaded rod can thus be established in a particularly easy way by pushing-in the threaded rod, which can further facilitate handling. The ratchet tooth can for example be an annular segment or a helical segment.

It is particularly preferred that the at least one ratchet tooth is provided on the driver sleeve, which can provide a particularly easily built design and particular good performance.

According to another preferred embodiment of the invention, the channel nut comprises a first flange and a second flange, the lip insert has a first nut receptacle for receiving the first flange of the channel nut when the channel nut is in the channel engagement rotational position so as to lock the channel nut in the channel engagement rotational position, and the lip insert has a second nut receptacle for receiving the second flange of the channel nut when the channel nut is in the channel engagement rotational position so as to lock the channel nut in the channel engagement rotational position. Accordingly, the channel nut has two protruding flanges, preferably connected by a web to give a U-shape, wherein the provision of two protruding flanges can provide particularly good interlock with inwardly curved channel lips. In particular, each of flanges can be provided with two notches for engaging a respective channel lip. The lip insert is provided with two nut receptacles, for receiving one of the flanges each, which can provide particularly good rotational interlock in particularly easy manner.

Preferably, the lip insert is a wedge for axially locking between the lips of the channel so as to provide an axially fixed seat on the channel, in particular a unidirectionally axially fixed seat. Accordingly, the lip inserts tapers from a rear region towards a tip region, and the taper is so dimensioned, that the lip insert can engage between the lips of the channel but cannot be pulled through the lips of the channel when the lip insert is installed as intended. Thus, particularly reliable orientation of the lip insert can be achieved in a particularly easy manner. The at least one nut receptacle is in particular provided in the tip region of the lip insert.

The lip insert can, advantageously, have a rear flat for contacting a connector base. This can provide rotation of the lip insert relative to the connector base of an attachment part in a particular easy and reliable manner.

According to another preferred embodiment of the invention, the lip insert has at least one cam path surface for rotating the lip insert (in particular around the connector axis) when the lip insert is pressed (in particular axially with respect to the connector axis) against at least one of the lips of the channel. More preferably, two cam path surfaces are provided, the first cam path surface intended to cooperate with one of the channel lips the second cam path surface intended to operate against the other of the channel lips, wherein the channel lips preferably have an inward curvature. The at least one cam path surface can for example have eccentric or/and helical properties. Axial pressing of the cam path surface against one the lips generates a drive, which transforms axial force into a rotational movement of the lip insert with respect to the channel. This allows to provide a reset functionality, allowing to bring the channel nut back into the channel insertion rotational position in cases where the channel nut had been previously brought, for example inadvertently, into engagement with the nut receptacle.

The invention also relates to a channel connector comprising a connector unit as described herein, a connector base for abutting against the lips of the channel, wherein the lip insert is arranged, at least partly, between the connector base and the channel nut, and a threaded rod that passes, rotatably, through the connector base and through the lip insert, to the rotational driver, wherein the rotational driver couples the threaded rod to the channel nut. Accordingly, the connector unit is integrated into a channel connector as intended. The connector base can be part of an attachment part. Preferably, the connector base is a base plate.

The channel connector can be shipped as it is to the installer. Alternatively, the parts of the channel connector can be shipped separately and assembled by the installer.

It is particularly preferred that the channel connector further comprises an axial abutment that is provided on the threaded rod, and a compression spring, which acts, indirectly or directly, against the axial abutment of the threaded rod, and which also acts, preferably indirectly via the connector base, against the lip insert, so as to bias the channel nut, which is coupled to the threaded rod by means of the rotational driver, against the lip insert. This bias can provide the snap-in effect already discussed above, when the channel nut comes into alignment with the nut receptacle in the channel engagement rotational position, and can subsequently provide a pre-mounting force providing some engagement of the channel nut on the channel lips, so that the channel connector is already fixed, but still slidable on the channel.

The axial abutment is preferably fixed on the threaded rod to rotate with the threaded rod, which allows rotating the channel nut by rotating the axial abutment. Preferably, the axial abutment and the threaded rod are integral parts. It is particularly preferred that the axial abutment is a head, in particular an integral head, of the threaded rod. The head can for example be a hex head.

The compression spring is a preferably conical spring. This can prevent overlap of the windings of the spring as the threaded rod is tightened, thereby providing particularly well-defined force. Advantageously, the compression spring is clamped to the threaded rod. This can provide a loss prevention mechanism in particularly easy manner and/or it can permit particularly easy handling of the threaded rod and of the compression spring as a unit.

The invention also relates to a connector arrangement comprising the mentioned channel and the mentioned channel connector.

Throughout this document, wherever the terms "axially", "longitudinally", "radially" and "circumferentially" are used, they should refer, in particular, to the connector axis, which is the axis of the threaded bore of the channel nut, which is also the intended axis of rotation of the channel nut between the channel insertion rotational position and the channel engagement rotational position, which is an axis perpendicular to the channel mouth when the connector unit and/or the channel connector is installed as intended.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a perspective view, figure 2 a side view and figure 3 a top view of a connector unit.
Figure 4 is a top view, figure 5 a bottom view, figure 6 a perspective view from below, and figure 7 a perspective view from above of the lip insert of the connector unit of figures 1 to 3.
Figure 8 is a top view, figure 9 a first side view, figure 10 a second side view, figure 11 a perspective view and figure 12 a sectional view of the rotational driver of the connector unit of figures 1 to 3.
Figures 13 to 29 show a channel connector including the connector unit of figures 1 to 3 in different views at successive stages during installation of the channel connector on a strut channel. In particular,

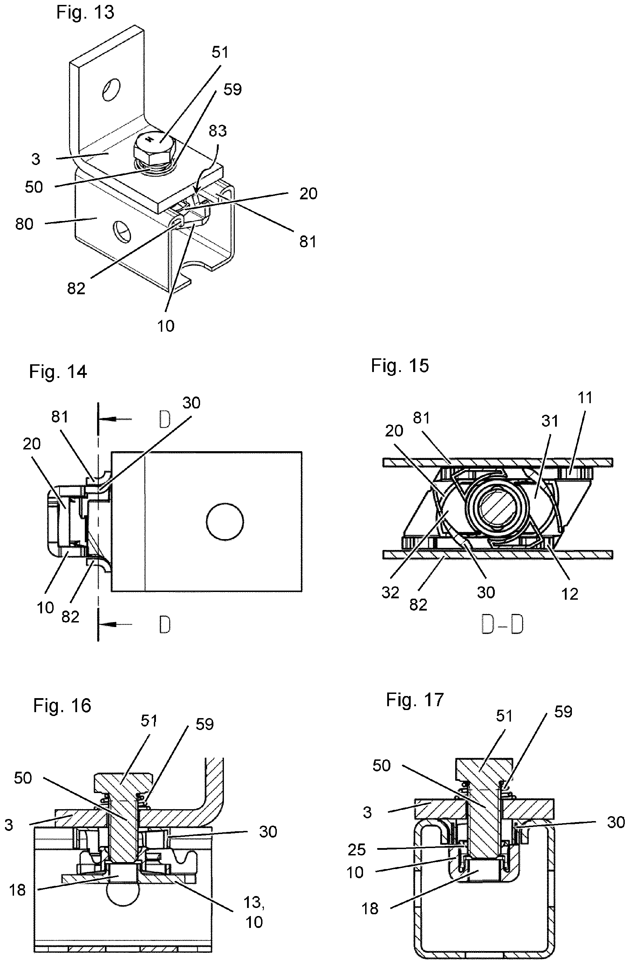

   - figures 13 to 17 show an insertion stage (first stage), with the channel connector in perspective view in figure 13, in side view (with channel partly omitted) in figure 14, in sectional view D-D according to figure 14 in figure 15, and in two different sectional side views in figures 16 and 17;

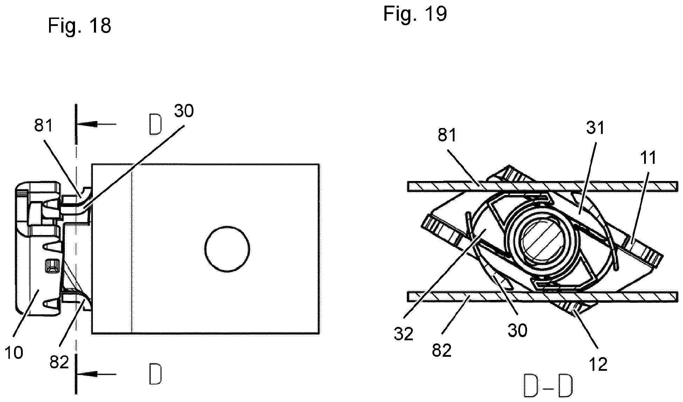

   - figures 18 to 19 show an intermediate rotation stage (second stage, following the first stage), with the channel connector in side view (with channel partly omitted) in figure 18 and in sectional view D-D according to figure 18 in figure 19;

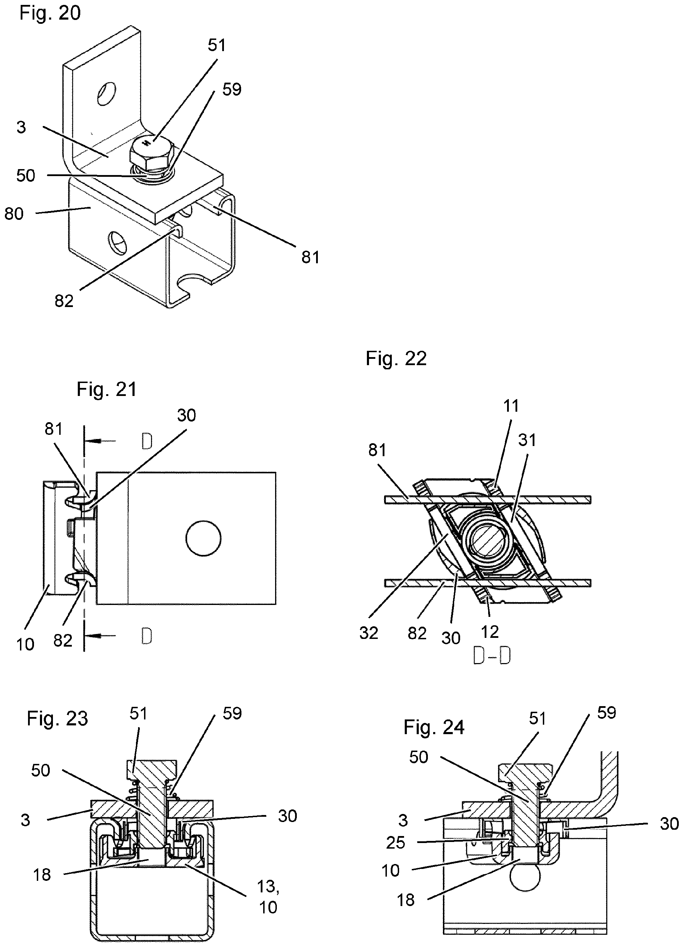

   - figures 20 to 24 show a snap-in stage (third stage, following the second stage), with the channel connector in perspective view in figure 20, in side view (with channel partly omitted) in figure 21, in sectional view D-D according to figure 21 in figure 22, and in two different sectional side views in figures 23 and 24;

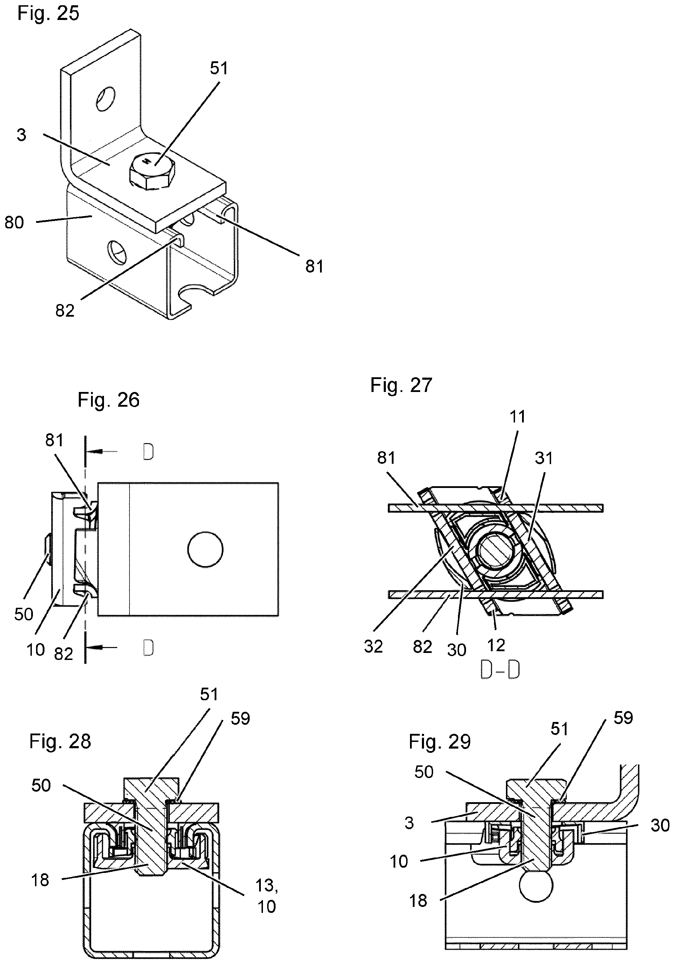

   - figures 25 to 29 show a final stage (fourth stage, following the third stage), with the channel connector in perspective view in figure 25, in side view in figure 26 (with channel partly omitted), in sectional view D-D according to figure 26 in figure 27, and in two different sectional side views in figures 28 and 29.

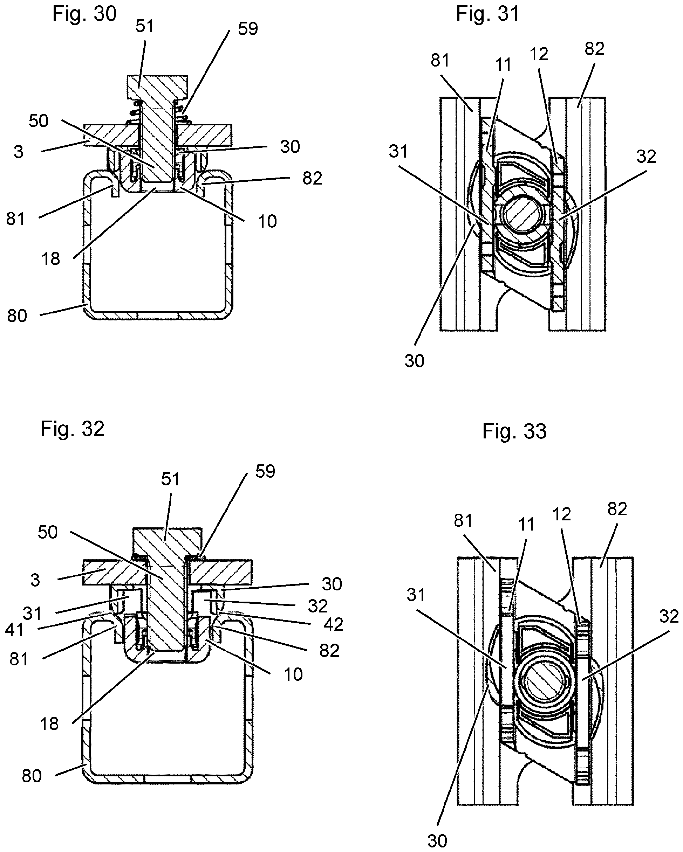

Figures 30 to 37 show the channel connector in different views at successive stages during resetting of the channel connector, in particular
   - Figures 30 and 31 show a first stage during the resetting process, in different cross-sectional views;
   - Figures 32 and 33 show a second stage during the resetting process, again in different cross-sectional views;

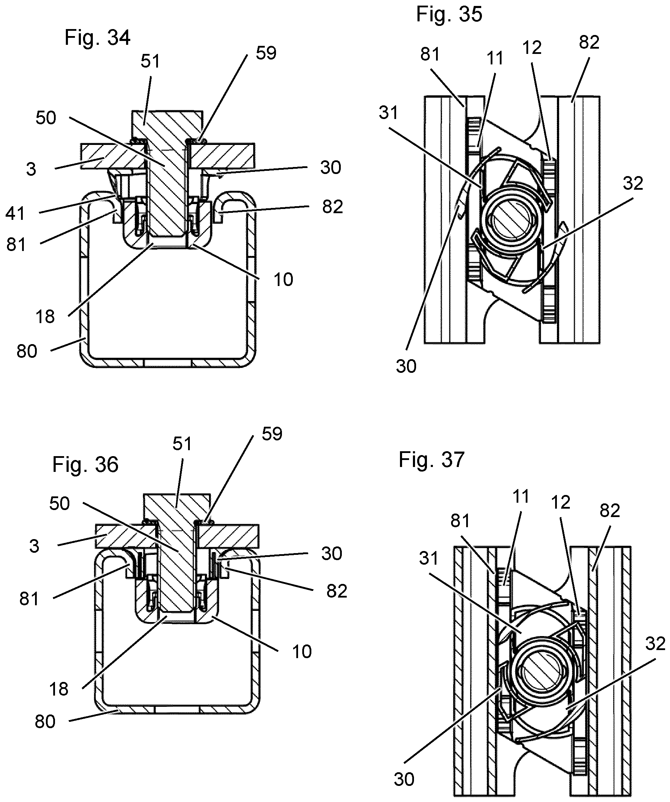

   - Figures 34 and 35 show a third stage during the resetting process, again in different cross-sectional views;
   - Figures 36 and 37 show a fourth stage during the resetting process, again in different cross-sectional views.

The channel connector is intended to connect to an elongate strut channel 80, as shown for example in figure 13. The strut channel 80 can for example be a C-shape channel, as shown, or also a V-shaped or differently shaped channel. The channel 80 comprises a mouth, where the channel 80 comprises two lips 81, 82 which lips 81, 82 flank a slot 83 that provides access to the inside of the channel 80 from the outside of the channel 80. In the shown embodiment, the lips 81, 82 are inturned, but this is an example only, and in other embodiments, they could be differently shaped, including a flat shape.

The channel connector comprises a connector base 3 that is dimensioned and intended to abut against the lips 81 and 82 of the channel 80 from outside of the channel 80, i.e. the connector base 3 is dimension sufficiently large so that it does not enter the slot 83 provided between the lips 81 and 82. The connector base 3 can be part, also integral part, of an attachment element. In the embodiment shown, the attachment element is a L-bracket, but this is an example only.

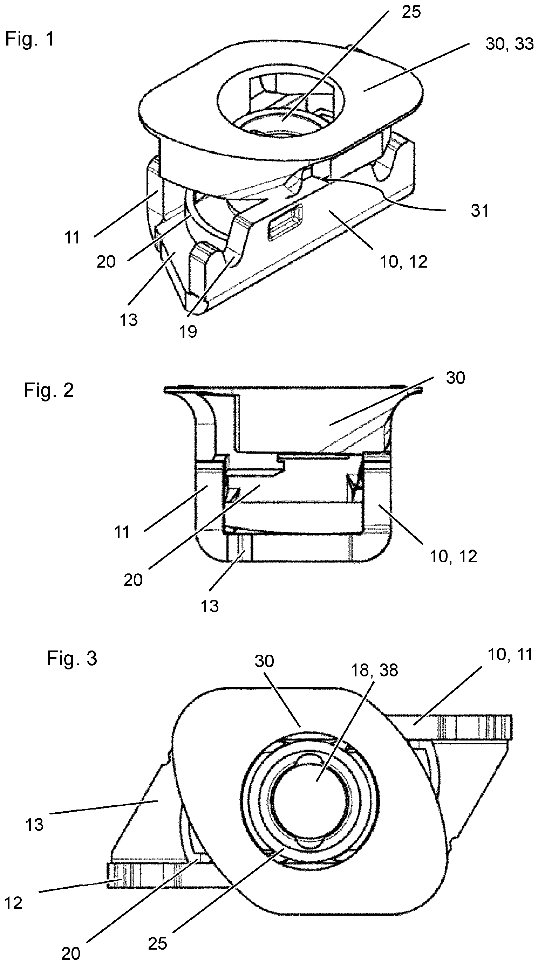

The channel connector further comprises an elongate channel nut 10, consisting for example of steel. The channel nut 10 comprises an internally threaded bore 18, see for example figures 3, 16 and 17. The threaded bore 18 is intended for screwingly receiving a threaded rod 50 of the channel connector (the threaded rod 50 being shown for example in figures 13, 16 and 17). The channel nut 10 is elongate and has a width that is smaller than the slot 83 provided at the mouth of the channel 80, and a length that is wider than the slot 83 provided at the mouth of the channel 80. Consequently, the channel nut 10 may be inserted into the channel 80 though the slot 83 and subsequently locked behind the lips 81 and 82 of the channel 80 by rotating the channel nut 10, around an axis of the threaded bore 18 (which is the connector axis), from a channel insertion rotational position into a channel engagement rotational position. In the present embodiment, the channel nut 10 is U-profiled, and comprises a first flange 11, a second flange 12 and a web 13 that connects the first flange 11 and the second flange 12 to one another. The threaded bore 18 is provided within the web 13. In the present embodiment, the threaded bore 18 is collared, in order to achieve greater thread height, but this is an example only. Each of flanges 11 and 12 has two notches 19, each for receiving one of the lips 81 and 82 of the channel 80, respectively. By way of example, one of the notches 19 is referenced to in figure 1.

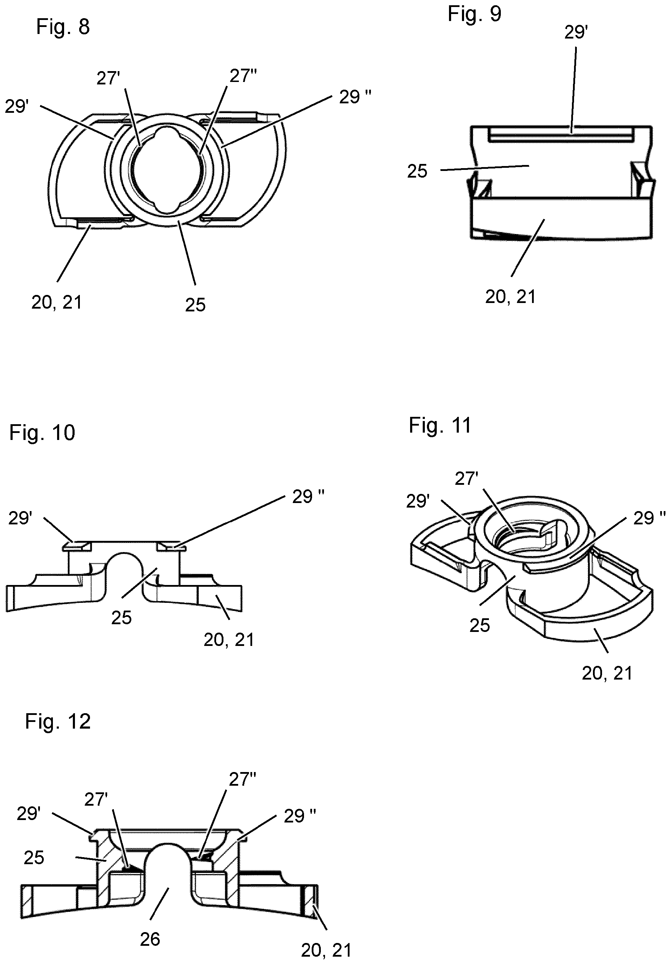

The channel connector further comprises a rotational driver 20, consisting for example of a plastic material, and shown in detail in figures 8 to 12. The rotational driver 20 is intended for rotationally coupling the threaded rod 50 of the channel connector (the threaded rod being shown for example in figures 13, 16 and 17) to the channel nut 10, such that the threaded rod 50 and the channel nut 10 can co-rotate around the connector axis, which coincides with the axis of the threaded bore 18, so that the channel nut 10 can be rotated between the channel insertion rotational position and the channel engagement rotational position through rotating the threaded rod 50. The rotational driver 20 comprises a driver sleeve 25, intended for receiving the threaded rod 50, and a driver base 21, which has a two-winged and/or frame-like geometry, and which connects the driver sleeve 25 to the channel nut 10. The rotational driver 20 furthermore comprises at least one tooth 27', 27", which projects into the driver sleeve 25, and which is intended for engaging the thread of the threaded rod 50, thereby geometrically and/or frictionally coupling the threaded rod 50 to the rotational driver 20 and thus to the channel nut 10 attached thereto. In the present embodiment, two separate teeth 27', 27" are provided, each of them being generally helical. The at least one tooth 27', 27" and/or the driver sleeve 25 have some elasticity, which allows the at least one tooth 27', 27" to successively engage the thread of the threaded rod 50 in a ratchet-like manner when the threaded rod 50 is plugged-in axially into the driver sleeve 25. The driver sleeve 25 can have at least one cut-out 26 for increasing elasticity. In the present embodiment, two cut-outs 26 are provided, which are indicated with a reference numeral in figure 12. The at least one cut-out 26 faces the channel nut 10, i.e. it originates from the bottom opening of the driver sleeve 25, which bottom opening faces the channel nut 10. The at least one cut-out 26 ends, axially, above the at least one tooth 27', 27" (i.e. the cut-out 26 reaches further to the insertion opening of the driver sleeve 25 than does the least one tooth 27', 27"), thereby providing a pivot axis within the driver sleeve 25, which pivot axis is located above the at least one tooth 27', 27'. This can provide a particularly good ratchet effect. The insertion opening and the bottom opening, respectively, of the driver sleeve 25 are opposite openings of the driver sleeve 25. In the shown embodiment, the rotational driver 20 is a monolithic piece, i.e. all of its parts are one piece. However, this is an example only.

The channel connector further comprises a lip insert 30, consisting for example of a plastic material. The lip insert 30 forms a geometric negative of the channel lips 81, 82. As a consequence, the lip insert 30 forms a wedge that can engage into the channel lips 81 and 82 so as to provide a bidirectionally rotationally (around the connector axis, which axis is perpendicular to the mouth of the channel when the lip insert is installed as intended) fixed seat and a unidirectional axially (in the direction of the connector axis) fixed seat. In other words, the lip insert 30 is so dimensioned that it can be positioned between the lips 81, 82 (without being pulled through the lips 81, 82), where the lip insert 30 is geometrically locked (possibly with some play, but possibly also snugly) against rotation around the connector axis by the lips 81 and 82. The lip insert 30 comprises at least one nut receptacle 31, 32. This at least one nut receptacle 31, 32 is intended for receiving the channel nut 10 when the channel nut 10 is in the channel 80 engagement rotational position, by displacing the channel nut 10 axially towards the lip insert 30. Once the channel nut 10 is received in the at least one nut receptacle 31, 32 of the lip insert 30, the lip insert 30 geometrically rotationally locks (possibly with some play, but possibly also snugly) the channel nut 10 in the channel 80 engagement rotational position. In the shown embodiment, two groove-shaped nut receptacles 31, 32 are provided, the first nut receptacle 31 being intended to receive the first flange 11 of the channel nut 10 and the second nut receptacle 32 being intended to receive the second flange 12 of the channel nut 10. The lip insert 30 has a rear flat 33 for contacting the connector base 3, the rear flat being denoted by a reference numeral for example in figure 1. The driver sleeve 25 of the rotational driver 20 projects into the lip insert 30, and this provides a rotational bearing of the driver sleeve 25 within the lip insert 30, which allows rotation of rotational driver 20 and the channel nut 10 connected thereto with respect to the lip insert 30 around the connector axis. The driver sleeve 25 is connected to the lip insert 30 by means of an annular snap fit. This annular snap fit can comprise radial snap teeth 29', 29" projecting radially outwards on the driver sleeve, and corresponding radial snap teeth 39', 39" provided on the lip insert 30. In the shown embodiment, the lip insert 30 is a monolithic piece, i.e. all of its parts are one piece. However, this is an example only.

The lip insert 30 has a passage 38 for the threaded rod 50, which passage 38 is denoted by a reference numeral in figure 3. The passage 38 is aligned with the driver sleeve 25 and/or with the threaded bore 18 and/or with a rod passage in the connector base 3, so that the threaded rod 50 can be passed through the passage in the connector base 3, through the passage 38 and through the driver sleeve 25 into the threaded bore 18. The connector axis passes through rod passage in the connector base 3, through the passage 38, through the driver sleeve 25 and/or through the threaded bore 18. The lip insert 30 is arranged axially between the connector base 3 and the channel nut 10 when the connector is assembled.

The channel nut 10, the rotational driver 20 and the lip insert 30 form connector unit, which connector unit is a part of the channel connector.

The channel connector further comprises the already aforementioned threaded rod 50. The threaded rod passes through the passage in the connector base 3 and through the passage 38 in the lip insert 30 into the driver sleeve 25.

The channel connector further comprises an axial abutment 51, which is provided on the threaded rod 50. In the shown embodiment, the axial abutment 51 is a head, in particular a hex head, provided monolithically on the threaded rod 50, which is, however, an example only. The channel connector further comprises a compression spring 59, which on one side rests against the axial abutment 51 of the threaded rod 50 and on the other side against the lip insert 30, namely via the connector base 3. The compression spring 59 biases the channel nut 10 that is coupled to the threaded rod 50 by means of the rotational driver 20 against the lip insert 30, and is able to force the channel nut 10 into the at least one nut receptacle 31, 32 of the lip insert 30 when the channel nut 10 reaches the channel 80 engagement rotational position, thereby creating a snap-in mechanism, in which the channel nut 10 snaps into the at least one nut receptacle 31, 32.

In the shown embodiment, the compression spring 59 is, by way of example, a conical spring.

In the following, the installation sequence of the channel connector on the channel 80 is described. At the first stage of the installation sequence, shown in figures 13 to 17, the channel connector is in insertion configuration, in which the channel nut 10 is in the channel 80 insertion rotational position, in which the channel nut 10 is rotationally offset with respect to the at least one nut receptacle 31, 32, and in which the compression spring 59 is slightly pretensioned. In the insertion configuration of the channel connector, the threaded rod 50 can end just before the threaded bore 18 of the channel nut 10, as shown. However, in other embodiments, the threaded rod 50 can already reach into the threaded bore 18 of the channel nut 10 in the insertion configuration. The connector is, with the channel nut 10 leading, inserted through the lips 81, 82 into the channel 80, until the connector base 3 and the lip insert 30 abut against the lips 81, 82 of the channel 80, so that the lip insert 30 provides an axial and rotational seat on the of the channel 80.

The threaded rod 50 is then rotated around the connector axis, for example by manually rotating the axial abutment 51 attached to the threaded rod 50. The rotational coupling provided by the rotational driver 20 causes the channel nut 10 to co-rotate with the threaded rod 50. The height of the lip insert 30 is sufficiently high, so that rotation of the channel nut 10 resting on the lip insert 30 is not obstructed by the height of the lips 81, 82, which allows the channel nut 10 to rotate behind the lips 81, 82. An intermediate rotation stage following from this rotation is shown in figures 18 to 19.

The channel nut 10 is further rotated around the connector axis by means of the threaded rod 50 until the channel nut 10 reaches the channel 80 engagement rotational position. In this rotational position, the first flange 11 is parallel to the first nut receptacle 31, and the second flange 12 is parallel to the second nut receptacle 32. Once the channel 80 engagement rotational position is reached by the channel nut 10, pretension of the compression spring 59 causes the channel nut 10, more particularly its flanges 11 and 12, to snap into the respective nut receptacle 31 or 32, providing the installer with sensory feedback that the correct installation position is reached. The flanges 11 and 12 are then pre-tensioned against the lips 81, 82 by means of the compression spring 59, which provides some preliminary installation force that still allows lateral displacement of the connector along the channel 80 (in particular if the threaded rod 50 is pressed-in slightly against the force of the compression spring 59). In particular, the notches 19 in the flanges 11 and 12 interlock with the respective lips 81, 82 in this state. The resulting snap-in stage is shown in figures 20 to 24. In the present embodiment, the angular offset of the channel nut 10 between the channel 80 engagement rotational position and the channel 80 insertion rotational position is 60° (around the connector axis). However, different angular offsets, such as 90° could also be envisaged.

Finally, the threaded rod is screwed into the threaded bore 18 to tighten the channel nut 10 against the channel lips 81, 82 and to generate the final locking force. Figures 25 to 29 show this final, fully tightened and/or fully torqued, stage. In particular, the edges of the notches 19 in the flanges 11 and 12 might bite into the respective lips 81, 82 in this final state, in order to provide a form-locking connection.

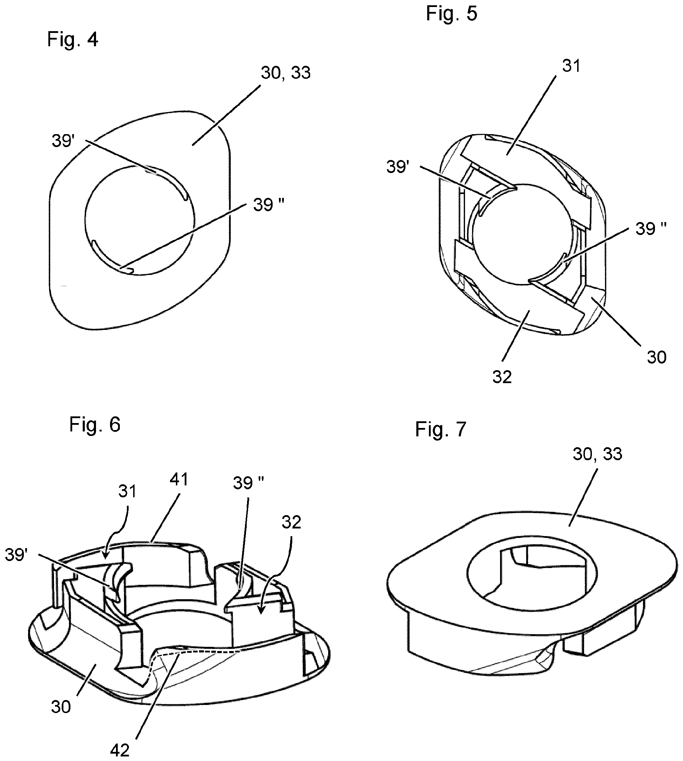

As can for example be seen in figure 6, the lip insert 30 is provided with two cam path surfaces 41 and 42. The first cam path surface 41 is intended to be pressed against one of the lips 81 and the second cam path surface 42 is intended to be pressed against the other of the lips 82, and they provide a cam mechanism that converts this pressing action into rotation of the lip insert 30 relative to the channel 80. This feature allows to easily reset the connector to its original insertion configuration once the channel nut 10 has snapped into the at least one nut receptacle 31, 32. The corresponding reset sequence is shown in figures 30 to 37. In this connection, it is noted that one cam path surface 41 or 42 might be sufficient to effect resetting.

At the beginning of the reset sequence, see figures 30 and 31, the channel nut 10 is in the channel 80 engagement rotational position, and the first flange 11 is located within the first nut receptacle 31, and the second flange is located within the second nut receptacle 32. The channel nut 10 brought into alignment with the lips 81 and 82 so as to fit between the lips 81 and 82.

The threaded rod 50 is subsequently pushed downwards into the channel 80 against the force of compression spring 59, resulting in the channel nut 10 being pushed deeper into the channel 80 and out of the nut receptacles 31, 32, so that the rotation lock previously provided by the nut receptacles 31, 32 is overcome. However, the channel nut 10 remains rotationally locked between the channel lips 81 and 82. The resulting configuration shown in figures 32 and 33.

Further pushing on the threaded rod 50 (and possibly some movement along the channel 80) forces the lip insert 30, namely the cam path surfaces 41 and 42, against the channel lips 81 and 82. The camming action forces the lip insert 30 to rotate relative to the channel nut 10 that remains rotationally locked by the channel lips 81, 82. As a consequence, the lip insert 30 rotates relative to the channel nut 10 around the connector axis through an intermediate configuration shown in figures 34 and 35 into the final configuration shown in figures 36 and the 37. In this final configuration, the channel nut 10 is back in the channel 80 engagement rotational position, and the channel nut 10 thus slips into the lips 81, 82 of the channel 80 so as to again provide a rotationally fixed seat on the channel 80. The connector can now be installed anew.

## Claims

1. Connector unit for providing a connection to a strut channel (80) that has two opposing lips (81, 82), the connector unit comprising
• an elongate channel nut (10) for engaging behind the lips (81, 82) of the channel (80), wherein the channel nut (10) has a threaded bore (18) for threadedly receiving a threaded rod (50),
• a rotational driver (20) for rotationally coupling the threaded rod (50) to the channel nut (10), for rotating the channel nut (10) between a channel (80) insertion rotational position and a channel (80) engagement rotational position, and
• a lip insert (30) for engaging between the lips (81, 82) of the channel (80) so as to provide a rotationally fixed seat on the channel (80), wherein the lip insert (30) has at least one nut receptacle (31, 32) for receiving the channel nut (10) when the channel nut (10) is in the channel (80) engagement rotational position so as to rotationally lock the channel nut (10) in the channel (80) engagement rotational position.

2. Connector unit according to claim 1,
**characterized in that**
the rotational driver (20) comprises a driver sleeve (25) for receiving the threaded rod (50), and a driver base (21) that connects the driver sleeve (25) to the channel nut (10).

3. Connector unit according to claim 2,
**characterized in that**
the driver sleeve (25) projects into the lip insert (30) so as to provide a rotational bearing of the driver sleeve (25) within the lip insert (30).

4. Connector unit according to any of claims 2 or 3,
**characterized in that**
the driver sleeve (25) is connected to the lip insert (30) by means of an annular snap fit.

5. Connector unit according to any of the preceding claims,
**characterized in that**
the rotational driver (20) comprises at least one ratchet tooth (27', 27") for engaging the threaded rod (50).

6. Connector unit according to any of claims 2 to 4 and claim 5,
**characterized in that**
the at least one ratchet tooth (27', 27") is provided on the driver sleeve (25).

7. Connector unit according to any of the preceding claims,
**characterized in that**
the channel nut (10) comprises a first flange (11) and a second flange (12),
the lip insert (30) has a first nut receptacle (31) for receiving the first flange (11) of the channel nut (10) when the channel nut (10) is in the channel (80) engagement rotational position so as to lock the channel nut (10) in the channel (80) engagement rotational position, and
the lip insert (30) has a second nut receptacle (32) for receiving the second flange (12) of the channel nut (10) when the channel nut (10) is in the channel (80) engagement rotational position so as to lock the channel nut (10) in the channel (80) engagement rotational position.

8. Connector unit according to any of the preceding claims,
**characterized in that**
the lip insert (30) is a wedge for axially locking between the lips (81, 82) of the channel (80) so as to provide an axially fixed seat on the channel (80).

9. Connector unit according to any of the preceding claims,
**characterized in that**
the lip insert (30) has a rear flat (33) for contacting a connector base (3).

10. Connector unit according to any of the preceding claims,
**characterized in that**
the lip insert (30) has at least one cam path surface (41, 42) for rotating the lip insert (30) when the lip insert (30) is pressed against at least one of the lips (81, 82) of the channel (80).

11. Channel connector comprising
a connector unit according to any of the preceding claims,
a connector base (3) for abutting against the lips (81, 82) of the channel (80), wherein the lip insert (30) is arranged, at least partly, between the connector base (3) and the channel nut (10), and
a threaded rod (50) that passes, rotatably, through the connector base (3) and through the lip insert (30) to the rotational driver (20), wherein the rotational driver (20) couples the threaded rod (50) to the channel nut (10).

12. Channel connector according to claim 11,
**further comprising**
an axial abutment (51) that is provided on the threaded rod (50), and
a compression spring (59), which acts against the axial abutment (51) of the threaded rod (50) and against the lip insert (30), so as to bias the channel nut (10), which is coupled to the threaded rod (50) by means of the rotational driver (20), against the lip insert (30).

13. Channel connector according to claim 12,
**characterized in that**
the axial abutment (51) is a head of the threaded rod (50).

14. Channel connector according to any of claims claim 12 or 13,
**characterized in that**
the compression spring (59) is a conical spring.

15. Channel connector according to any of claims claim 12 to 14,
**characterized in that**
the compression spring (59) is clamped to the threaded rod (50).

16. Connector arrangement comprising a channel (80) and a channel connector according to any of claims claim 11 to 15.
